# EUROPEAN PATENT APPLICATION

(11) **EP 1 072 996 A1**
(43) Date of publication of application: **31.01.2001**
(21) Application number: 99901163.8
(22) Date of filing: 22.01.1999
(51) Int. Cl.: G06F 19/00, G06F 157/00

(54) **MONETARY INFORMATION MANAGING SYSTEM, PORTABLE INFORMATION HOLDING DEVICE, TERMINAL, AND TERMINAL MANAGING DEVICE**

(30) Priority: 13.03.1998 JP 6274398
(71) Applicant: FUJITSU LIMITED, Kawasaki-shi, Kanagawa 211-8588 (JP); The Sakura Bank, Ltd., Chiyoda-ku, Tokyo 102-0074 (JP)
(72) Inventor: MORI, Nobuyuki, Fujitsu Limited, Kawasaki-shi, Kanagawa 211-8588 (JP); MIYASAKA, Michihiro, Fujitsu Limited, Kawasaki-shi, Kanagawa 211-8588 (JP); OKI, Masanao, The Sakura Bank, Limited, Tokyo 102-0074 (JP)
(74) Representative: Mohun, Stephen John
(86) International application number: JP9900280
(87) International publication number: WO9946713

(57) **Abstract**

The invention provides a monetary data management system which increases the probability that missing cards will be returned to their rightful owners. According to the present invention, the proposed monetary data management system manages monetary data as follows. When a person attempts to use a portable data storage device (1) containing user authentication data (1a), a user authentication means (3c) determines whether the bearer is the rightful owner of the device (1). When the bearer of the device (1) has been verified as the authorized owner, a monetary data handling permission means (3d) grants him/her a permission to manipulate the monetary data. When someone has found and delivered a portable data storage device (1), a found article information sending means (3e) collects and keeps the device (1) as a found article.

## Description

### Technical Field

The present invention relates to a monetary data management system, a portable data storage device, a terminal station, a terminal management unit, and a storage medium storing a monetary data management program. More particularly, the present invention relates to a monetary data management system which manages monetary data by using a portable data storage device containing user authentication data, and to a portable data storage device which contains user authentication data to permit the bearer to handle monetary data. The present invention also relates to a terminal station, coupled to a terminal management unit, which handles monetary data by using a portable data storage device containing user authentication, as well as to a terminal management unit which manages terminal stations being coupled thereto by using a portable data storage device which contains user authentication data to permit the bearer to handle monetary data. The present invention further relates to a storage medium containing a monetary data management program which uses a portable data storage device containing user authentication data to permit the bearer to handle monetary data.

### Background Art

People use credit cards and electronic money cards for cashless transactions, as well as cards issued by various financial institutions and electronic wallets. These instruments are collectively referred to as the "cards" in the present invention. When using such cards, the cardholders are requested to authenticate their identity. When a card is lost, Its owner is requested in general to visit an office of the is suing financial institution and report the loss at an appropriate service counter. Such a service counter, however, is not always open; the customer who lost his/her card has to visit the office during their business hours to submit a lost report.

Based on the submitted lost report, the issuing Institution Initiates a procedure of reissuing the lost card to the customer. The reissuance of a lost card, however, is a time-consuming and labor-intensive task. For this reason, most losers wish that their lost cards could soon be found and returned to them, rather than having new cards issued.

However, there has been a problem that the likelihood of card recovery is quite limited because it is not an urgent matter for a person who found a lost card to deliver it to the Issuer's service counter.

### Disclosure of the Invention

Taking the above into consideration, an object of the present invention to provide a monetary data management system which has a higher probability that a lost card will be returned to its rightful owner, as well as avoiding fraudulent use of the lost card by an unauthorized person.

Another object of the invention is to provide a card (i.e., portable data storage device) which is more likely to be returned to its rightful owner when it is lost, as well as avoiding its unauthorized use.

Still another object of the invention is to provide a terminal station which has a higher possibility that a lost card will be returned to its rightful owner, as well as avoiding its unauthorized use.

Yet another object of the invention is to provide a terminal management unit which promotes the recovery of a lost card to its rightful owner, as well as avoiding fraudulent use of the lost card by an unauthorized person.

A further object of the invention is to provide a storage medium containing a monetary data management program to realize a monetary data management system where a lost card will be returned to its rightful owner with a higher probability, as well as avoiding fraudulent use of the lost card by an unauthorized person.

To accomplish the above objects, according to the present invention, there is provided a monetary data management system which manages monetary data by using a portable data storage device containing user authentication data. This monetary data management system comprises the following elements: user authentication means for interfacing with the portable data storage device, and determining whether the bearer of the portable data storage device is an authorized owner thereof; monetary data handling permission means for granting the bearer a permission to handle the monetary data, when the user authentication means has successfully verified the bearer as the authorized owner of the portable data storage device; and found article keeping means for collecting and keeping the portable data storage device when the portable data storage device is delivered as a found article.

The proposed monetary data management system manages monetary data as follows. When a person attempts to use a portable data storage device containing user authentication data, the user authentication means determines whether the bearer is the rightful owner of the device. When the user authentication means has successfully verified the bearer as the authorized owner, the monetary data handling permission means grants him/her a permission to handle the monetary data. The found article keeping means collects and keeps the portable data storage device when the portable data storage device is delivered as a found article.

As seen from the above, the proposed monetary data management system is configured to collect a portable data storage device (card) that is accepted as a found article. The finder can take the found card to the system at his/her convenience, without the need for visiting a lost and found desk during business hours. This mechanism increases the possibility that the lost cards will be recovered.

Further, to accomplish the above objects, the present invention provides a monetary data management system which manages monetary data by using a portable data storage device containing user authentication data. This system comprises the following elements: lost report reception means for receiving and maintaining a lost report; user authentication means for interfacing with the portable data storage device, comparing the user authentication data in the portable data storage device with that in the lost report, and determining whether the bearer of the portable data storage device is an authorized owner thereof; and monetary data handling permission means for preventing the bearer from manipulating the monetary data with the portable data storage device when the user authentication data in the portable data storage device agrees with that in the lost report, and granting the bearer a permission to handle the monetary data when the bearer has successfully been verified as the authorized owner of the portable data storage device.

The proposed monetary data management system manages monetary data as follows, using portable data storage devices each containing user authentication data. When a portable data storage device is lost, the lost report reception means receives its lost report and stores it. On the other hand, when a person attempts to use a portable data storage device, the user authentication means accepts it and determines whether the bearer is the rightful owner of the device, comparing the user authentication data in the device with that in the stored lost report. If the user authentication data in the device agrees with that in the stored lost report, the monetary data handling permission means prevents the bearer from manipulating the monetary data with the portable data storage device. When the bearer has successfully been verified as the authorized owner of the device, it grants him/her a permission to handle the monetary data.

As seen from the above, the proposed monetary data management system is configured to accept and store lost reports of portable data storage devices (cards), so that the user authentication data recorded in a card will be compared with the stored reports when the card is used. If there is a match, the system prevents access to the monetary data in the card account. This mechanism protects the lost cards from unauthorized use, besides increasing the possibility of their recovery.

Further, to accomplish the above objects, the present invention provides a portable data storage device which contains user authentication data to permit a bearer to handle monetary data. This device comprises means for storing reward data which is used in giving a reward to a person who has delivered the portable data storage device as a found article.

The proposed portable data storage device contains reward data describing how to pay a reward to the finder, in addition to user authentication data to permit a bearer to handle monetary data.

As seen from the above, the proposed portable data storage device (card) is configure to store reward data specifying how to pay a reward to a finder when it is lost and found. This feature contributes to an increased likelihood of lost card recovery.

Further, to accomplish the above objects, the present invention provides a terminal station coupled to a terminal management unit, which handles monetary data through a portable data storage device containing user authentication data. This terminal station comprises the following elements: user authentication means for interfacing with the portable data storage device, and determining whether a bearer of the portable data storage device is an authorized owner thereof; monetary data handling permission means for granting the bearer a permission to handle the monetary data, when the user authentication means has successfully verified the bearer as the authorized owner of the portable data storage device; found article information sending means for producing and sending found article information to the terminal management unit when the portable data storage device is delivered as a found article, the found article information including the user authentication data extracted from the portable data storage device: and found article keeping means for collecting and keeping the portable data storage device when the portable data storage device is delivered as a found article.

The above terminal station handles monetary data as follows, using portable data storage devices each containing user authentication data. When a person attempts to use a portable data storage device, the user authentication means accepts it and determines whether the bearer is the rightful owner of the device. If the user authentication means has successfully verified the bearer as the authorized owner, the monetary data handling permission means grants him/her a permission to handle the monetary data. The found article information sending means produces and sends found article information to the terminal management unit when the portable data storage device is delivered as a found article. This found article information includes the user authentication data extracted from the portable data storage device. The found article keeping means collects and keeps the portable data storage device when the portable data storage device is delivered as a found article.

As seen from the above, the proposed terminal station is configured to produce found article information, including user authentication data extracted from a portable data storage device (card), and send it to the terminal management unit when the device is delivered as a found article. After that, the terminal station collects and keeps the delivered portable data storage device. This feature contributes an increased possibility of lost card recovery.

Further, to accomplish the above objects, the present invention provides a terminal station coupled to a terminal management unit, which handles monetary data through a portable data storage device containing user authentication data. This device comprises the following elements: lost report sending means for accepting a lost report stating that the portable data storage device is lost, and sends the received lost report to the terminal management unit; distribution data reception means for receiving and storing the lost report redistributed from the terminal management unit; user authentication means for interfacing with the portable data storage device, comparing the user authentication data in the portable data storage device with that in the lost report, and determining whether a bearer of the portable data storage device is an authorized owner thereof; and monetary data handling permission means for preventing the bearer from manipulating the monetary data with the portable data storage device, when the user authentication data in the portable data storage device agrees with that in the lost report, and for granting the bearer a permission to handle the monetary data, when the bearer has successfully been verified as the authorized owner of the portable data storage device.

The above terminal station handles monetary data as follows, using portable data storage devices each containing user authentication data. When a portable data storage device is lost, the lost report reception means receives its lost report and sends it to the terminal management unit. The distribution data reception means receives and stores like lost reports redistributed from the terminal management unit. When a person attempts to use a portable data storage device, the user authentication means accepts it and determines whether the bearer is the rightful owner of the device, as well as comparing the user authentication data in the device with each of the stored lost reports. If the user authentication data in the device agrees with that in any of the stored lost reports, the monetary data handling permission means prevents the bearer from manipulating the monetary data with the portable data storage device. When the bearer has successfully been verified as the authorized owner of the device, it grants him/her a permission to handle the monetary data.

As seen from the above, the proposed terminal station is configured to accept lost reports concerning portable data storage devices (cards), send them to the terminal management unit, receives the reports redistributed from the terminal management unit, and keeps them locally. When a customer attempts to use a card, his/her authentication data is compared with the stored lost reports, and if there is a match, the terminal station disables access to the monetary data. This mechanism protects lost cards from unauthorized use, besides increasing the likelihood of their recovery.

Further, to accomplish the above objects, the present invention provides a terminal management unit which manages a terminal station coupled thereto by using a portable data storage device containing user authentication data to permit a bearer thereof to handle monetary data. This terminal management unit comprises found article Information storage means for receiving and storing found article information sent from the terminal station, the found article information including the user authentication data extracted from the portable data storage device.

The above terminal management unit manages a terminal station as follows. When a portable data storage device containing user authentication data is delivered to a terminal station, the found article information storage means receives found article information from the terminal station and stores it. This found article information includes the user authentication data extracted from the portable data storage device.

As seen from the above, the proposed terminal management unit is configured to keep found article information sent from a terminal, station which describes a specific portable data storage device (card) that was found by someone. The finder can thus take the found card to a terminal station at any time as long as it is operating. This mechanism increases the possibility that the lost cards will be recovered.

Further, to accomplish the above objects, the present invention provides a terminal management unit which manages terminal stations linked therewith by using a portable data storage device containing user authentication data to permit a bearer thereof to handle monetary data. This monetary data management unit comprises the following elements: lost report storage means for receiving a lost report concerning the portable data storage device from one of the terminal stations, and storing the received lost report; and lost report distributing means for distributing the lost report to all the terminal stations linked therewith.

The proposed terminal management unit manages terminal stations as follows, using portable data storage devices each containing user authentication data to permit a bearer thereof to handle monetary data. When a terminal station sends a lost report concerning a portable data storage device, the found article information storage means receives and stores the lost report. The lost report distributing means redistributes such lost reports to all the terminal stations being linked with the management unit.

As seen from the above, the proposed terminal management unit is configured to distribute lost reports so that all terminal stations will share them. This arrangement contributes to an increased likelihood of recovery of lost cards, besides preventing their unauthorized use.

Further, to accomplish the above objects, the present invention provides a computer-readable medium storing a monetary data management program which manages monetary data by using a portable data storage device containing user authentication data to permit a bearer thereof to handle the monetary data. This program is designed to cause a computer to function as: user authentication means for interfacing with the portable data storage device, and determining whether the bearer is an authorized owner thereof; and monetary data handling permission means for granting the bearer a permission to handle the monetary data, when the user authentication means has successfully verified the bearer as the authorized owner of the portable data storage device; found article keeping means for collecting and keeping the portable data storage device when the portable data storage device is delivered as a found article.

The proposed monetary data management program is stored in a storage medium, which manages monetary data by using a portable data storage device that contains user authentication data to permit its bearer to handle the monetary data. When it is executed on a computer, the computer functions as a user authentication means which determines whether the bearer is an authorized owner of the device. The computer also acts as a monetary data handling permission means which grants the bearer a permission to handle the monetary data, when the bearer has successfully been authorized as the owner. The computer further functions as a found article keeping means which collects and keeps a portable data storage device when it is delivered as a found article.

As seen from the above, the proposed monetary data management program stored in a storage medium is designed to cause a computer to collect a portable data storage device (card) when it is brought in as a found article. The finder can deliver the card at his/her convenience, without the need for visiting a lost and found desk during business hours. This mechanism increases the possibility that the lost cards will be recovered.

Further, to accomplish the above objects, the present invention provides a computer-readable medium storing a monetary data management program which manages monetary data by using a portable data storage device containing user authentication data. This program causes a computer to function as: lost report reception means for receiving and maintaining a lost report; user authentication means for interfacing with the portable data storage device, comparing the user authentication data in the portable data storage device with that in the lost report, and determining whether a bearer of the portable data storage device is an authorized owner thereof; and monetary data handling permission means for preventing the bearer from manipulating the monetary data with the portable data storage device, when the user authentication data in the portable data storage device agrees with that in the lost report, and for granting the bearer a permission to handle the monetary data, when the bearer has successfully been verified as the authorized owner of the portable data storage device.

The proposed monetary data management program is stored in a storage medium, which manages monetary data by using a portable data storage device that contains user authentication data to permit its bearer to handle the monetary data. When it is executed on a computer, the computer functions as a lost report reception means which receives and stores lost reports. The computer also acts as a user authentication means which serves as an interface to the portable data storage device, and compares the user authentication data in the device with that in the stored lost reports, as well as determining whether a bearer of the device is its authorized owner. The computer further functions as a monetary data handling permission means which prevents the bearer from manipulating the monetary data with the portable data storage device, when the user authentication data in the device agrees with that in any of the lost reports. The monetary data handling permission means, on the other hand, grants the bearer a permission to handle the monetary data, when the bearer has successfully been authorized as the owner.

As seen from the above, the proposed monetary data management program stored in a storage medium is designed to cause a computer to accept lost reports concerning portable data storage devices (cards), keep them locally, and compare a customer's authentication data with the stored lost reports when he/she attempts to use a card. If there is a match, it disables access to the monetary data. This mechanism increases the possibility of recovery of lost cards, besides protecting them from unauthorized use

### Brief Description of the Drawings

FIG. 1 is a diagram which shows the basic concept of a monetary data management system according to the present invention;
FIG. 2 is a total block diagram of the proposed monetary data management system of FIG. 1, which is integrated in financial institutions;
FIG. 3 is another total block diagram of the proposed monetary data management system of FIG. 1, which is applied mainly to the handling of electronic wallet devices;
FIG. 4 is a diagram explaining what data is stored on a card with a magnetic stripe, which is one of the card types that the proposed monetary data management system supports;
FIG. 5 is a diagram showing the definition of a management status word, which is a part of the fraud prevention data shown in FIG. 4;
FIG. 6 is a diagram explaining what data is stored on a card containing IC memory devices, which is one of the card types that the proposed monetary data management system supports;
FIG. 7 is a diagram showing the definition of a management status word, which is a part of the fraud prevention data shown in FIG. 6;
FIG. 8 is a flowchart which shows the main process of an ATM;
FIG. 9 is the first half of a flowchart showing how an ATM handles the loss of a card;
FIG. 10 is the second half of the same flowchart;
FIG. 11 is the first half of a flowchart showing how a financial institution processor checks a lost report;
FIG. 12 is the second half of the same flowchart;
FIG. 13 is the first half of a flowchart which shows how a financial institution processor handles a monetary data transaction;
FIG. 14 is the second half of the same flowchart;
FIG. 15 is a flowchart which shows how an ATM collects a card for suspicion of unauthorized use;
FIG. 16 is a flowchart which shows how an ATM handles a found article; and
FIG. 17 is a flowchart which shows how a financial institution processor checks a found article.

### Best Mode for Carrying Out the Invention

Preferred embodiments of the present invention will be described below with reference to the accompanying drawings.

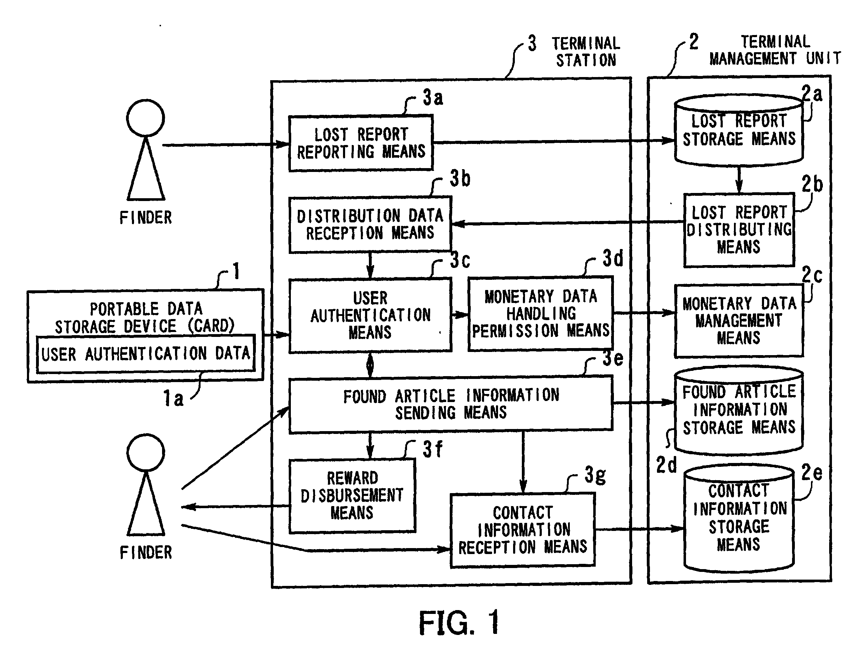

FIG. 1 shows the basic concept of a monetary data management system according to the present invention. This proposed monetary data management system employs a terminal management unit 2 and terminal stations 3, 4, 5, and so on to manage monetary data of a customer by using a portable data storage device 1 containing user authentication data 1a.

The portable data storage device 1 (hereafter "card") may be either of the following devices: a financial institution card, a credit card containing user authentication data, an electronic money card, an electronic wallet device containing monetary data, and the like.

The terminal management unit 2 comprises a lost report storage means 2a, a lost report distributing means 2b, a monetary data management means 2c, a found article information storage means 2d, and a contact information storage means 2e.

The lost report storage means 2a stores lost reports which have been received from customers (losers in this context) via the terminal stations 3, 4, 5, and so on (described later). Each time the data in this lost report storage means 2a is updated, the lost report distributing means 2b redistributes the reports to all the terminal stations 3, 4, 5, and so on.

The monetary data management means 2c maintains the customer's monetary data. When the customer uses the card 1 at either of the terminal stations 3, 4, 5, and so on, the monetary data management means 2c responds to his/her request.

When someone finds a lost article, the finder reports it through any of the terminal stations 3, 4, 5, and so on (described later), leaving his/her contact information. The found article information storage means 2d holds the information about that found article. The contact information storage means 2e saves contact information of the finder, in association with the found article information.

The terminal station 3 comprises a lost report reporting means 3a, a distribution data reception means 3b, a user authentication means 3c, a monetary data handling permission means 3d, a found article information sending means 3e, a reward disbursement means 3f, and a contact information reception means 3g. Other terminal stations 4, 5, and so on have the same structure as the terminal station 3. Because of their similarity, FIG. 1 illustrates only one terminal station 3.

The lost report reporting means 3a accepts a lost report from a customer who lost his/her card, and sends it the terminal management unit 2. The distribution data reception means 3b, on the other hand, receives a lost report redistributed by the terminal management unit 2 and maintains the information.

When the card 1 is applied to the terminal station 3, the user authentication means 3c accepts it and determines whether the bearer is the authorized owner of the card 1. The user authentication means 3c also compares the user authentication data 1a contained in the card 1 with the lost reports stored in the distribution data reception means 3b. The result of this comparison is sent to the monetary data handling permission means 3d.

The monetary data handling permission means 3d permits the bearer to manipulate the monetary data, if the user authentication means 3c has successfully authorized the bearer as the owner of the card 1. To the contrary, if the bearer turned out to be an unauthorized person, or if a lost report relevant to the card 1 was found, the monetary data handling permission means 3d would not allow the bearer to use the card 1 to access the monetary data.

When a person has delivered a card 1 as an article that he/she found, the found article information sending means 3e accepts it and produces found article information including the user authentication data extracted from the card 1, and sends that information to the terminal management unit 2. The found article information sending means 3e also determines whether the card 1 contains reward data describing how to reward the finder. If such reward data is found in the card 1, the found article information sending means 3e sends it to the reward disbursement means 3f. If no such data is found, it commands the contact information reception means 3g to ask the finder to leave his/her contact information.

The reward disbursement means 3f pays a reward to the finder when so notified from the found article information sending means 3e. The contact information reception means 3g receives contact information from the finder when so commanded by the found article information sending means 3e. The received contact information is sent to the terminal management unit 2.

A more specific example of the monetary data management system of FIG. 1 will now be described below.

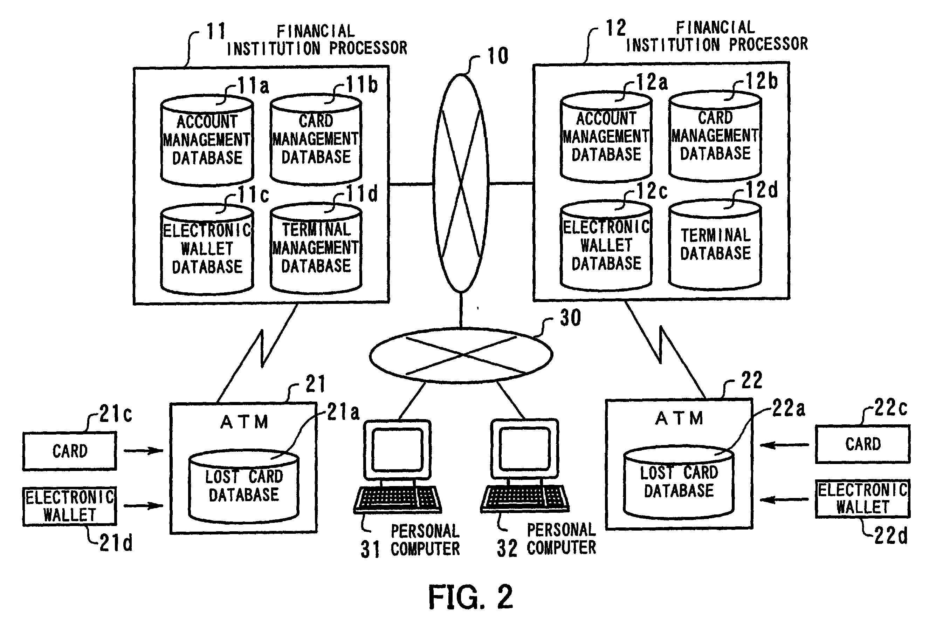

FIG. 2 is a total block diagram of the proposed monetary data management system of FIG. 1, which is integrated in financial institutions. Each financial institution employs a financial institution processor 11, 12, and so on, which is connected to a financial institution network 10 for data communication purposes.

The financial institution processor 11 comprises an account management database 11a, a card management database 11b, an electronic wallet database 11c, and a terminal management database 11d. The account management database 11a maintains customer accounts at that financial institution. The card management database 11b manages cards that the financial institution has issued to their customers. The electronic wallet database 11c manages electronic wallets that the financial institution has issued to their customers. The terminal management database 11d manages terminal stations linked online to the financial institution processor 11. Likewise, the financial institution processor 12 comprises an account management database 12a, a card management database 12b, an electronic wallet database 12c, and a terminal database 12d.

While a plurality of terminal stations may actually be linked online with the financial institution processors 11, 12, and so on, FIG. 2 illustrates only two ATMs 21 and 22 for simplicity. The ATM 21 is equipped with a lost card database 21a which manages information about lost cards. Records in this lost card database 21a are kept up-to-date by the financial institution processor 11. Another function of the ATM 21 is to accept cards 21c or electronic wallet devices 21d to allow the customers to manipulate their monetary data. The other ATM 22 also has a lost card database 22a. With those ATMs 21, 22, and so on, the customers can submit a lost report, or make an inquiry about whether their lost card was found. Also, anyone who found a lost card takes it to the nearest ATM.

The financial institution network 10 is linked with a public telephone network 30, to which the customers' personal computers 31, 32, and so on are connected. Through the public telephone network 30, the customers can make access to the financial institution processors 11 and 12 to ask about their lost card status.

There is another specific example of the monetary data management system of FIG. 1. The next section will provide the details.

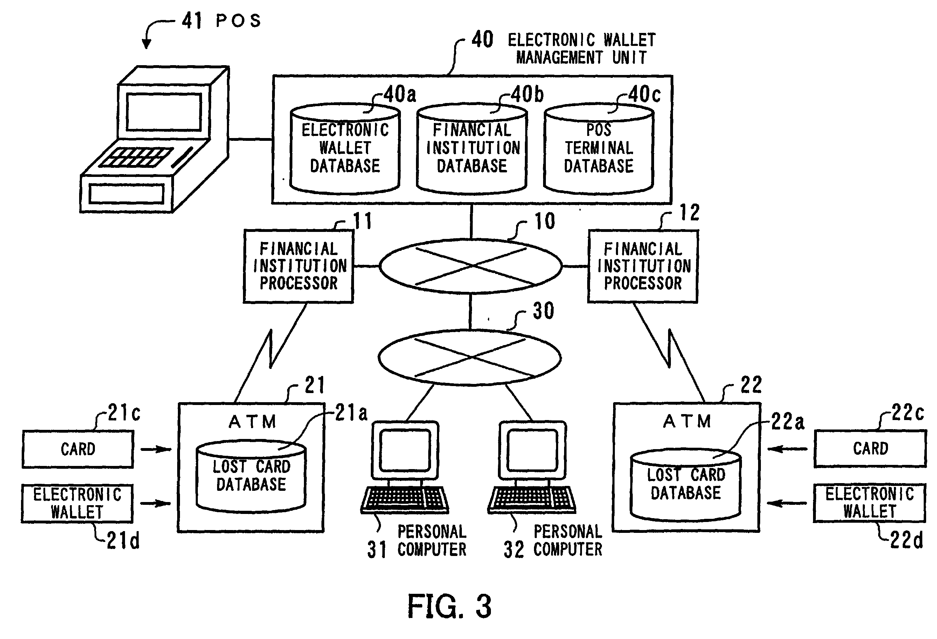

FIG. 3 is a total block diagram of the proposed monetary data management system of FIG. 1, which is intended mainly for the handling of electronic wallet devices. Notice that some elements are common to those shown in FIG. 2. The following section will not provide their details again, while affixing like reference numerals to like elements.

In this system, an electronic wallet management unit 40 connected to a financial institution network 10 supports any management tasks related to electronic wallet devices in a centralized manner, using its integral electronic wallet database 40a. The electronic wallet management unit 40 has a financial institution database 40b to manage all financial institutions on the financial institution network 10. The electronic wallet management unit 40 is also coupled to POS terminals 41 and so on, and to manage those POS terminals, it employs a POS terminal database 40c. Through the POS terminals 41 and so on, the customers can make an inquiry about whether their lost cards were found.

The proposed monetary data management system allows its customers to use portable data storage devices, or cards. The next section will provide the specifics.

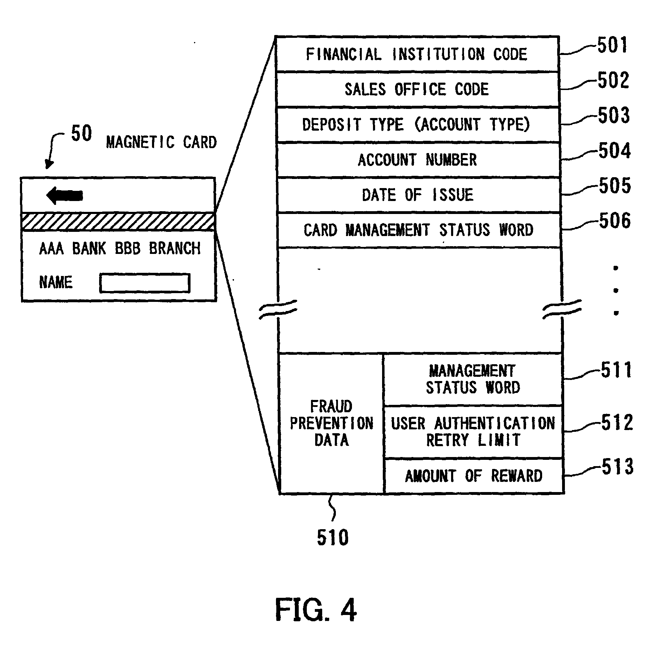

FIG. 4 explains what kind of data is stored on the stripe of a magnetic card, which is one of the card types that the proposed system supports. The illustrated magnetic card 50 has a strip of magnetic recording material for retaining various information as shown in FIG. 4. The retained information includes the following data items:
- Financial Institution Code 501 and Sales Office Code 502 which identify a specific office of the financial institution that issued the magnetic card 50
- Deposit Type (Account Type) 503 which shows what kind of deposit account the customer has
- Account Number 504
- Date of Issue 505 which indicates when the magnetic card 50 was issued
- Card Management Status Word 506 which indicates how the magnetic card 50 is configured and managed
- Fraud Prevention Data 510 which protects the magnetic card 50 from fraudulent use

The Fraud Prevention Data 510 consists of the following three parameters: Management Status Word 511, User Authentication Retry Limit 512. Amount of Reward 513, and others.

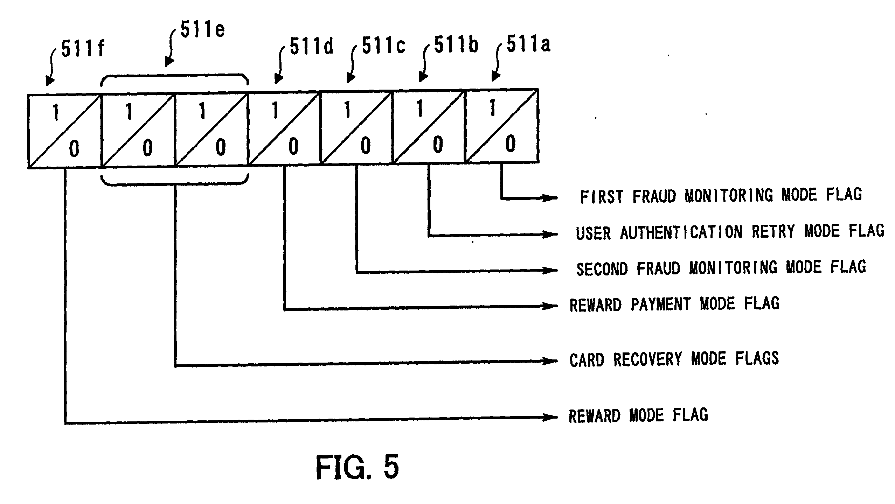

FIG. 5 shows the details of the Management Status Word 511, which is a part of the Fraud Prevention Data 510 shown in FIG. 4. This Management Status Word 511 includes at least the following flags:
- First Fraud Monitoring Mode Flag 511a
- User Authentication Retry Mode Flag 511b
- Second Fraud Monitoring Mode Flag 511c
- Reward Payment Mode Flag 511d
- Card recovery Mode Flags 511e
- Reward Mode Flag 511f

The First Fraud Monitoring Mode Flag 511a is defined when the card is created, which takes a binary value of "0" or "1." When this flag is cleared to "0," it means that no test will be performed to detect illegal use of the card. Conversely, the test will be performed when the flag is set to "1." More specifically, the customer is requested to authenticate himself/herself when using a card. While he/she may fail in the authentication for some reason, the customer is allowed to make a retry, up to a predetermined number of times. If the authentication could not be successful after all, the system would interpret it as an attempt of fraud and trap the card accordingly.

The User Authentication Retry Mode Flag 511b is also defined when the card is created, which takes a binary value of "0" or "1." This flag is valid only when the First Fraud Monitoring Mode Flag 511a is set to "1." When User Authentication Retry Mode Flag 511b is "0," the system's default retry limit will be applied to user authentication control. When the flag is set to "1," the User Authentication Retry Limit 512 specified in the Fraud Prevention Data 510 will work as the retry limit.

The Second Fraud Monitoring Mode Flag 511c is also defined when the card is created, which takes a binary value of "0" or "1." The value "0" of this flag means that the system would only produce an error signal, without trapping the card, when someone attempted to use the card in spite of the presence of a lost report submitted by the rightful owner. When the flag is set to "1," the system would abort the transaction and trap the card if the same suspicious attempt was observed.

The Reward Payment Mode Flag 511d is also defined when the card is created, which takes a binary value of "0" or "1." When this flag is cleared to "0," it means that the system is programmed not to perform an automatic reward payment even if someone has delivered the card as a found article. When it is set to "1," the system will automatically give a reward to a person who found and delivered the card.

The Card Recovery Mode Flags 511e are updated when a card is collected at a terminal station such as ATMs 21, 22, and so on. The flags 511e may be set to "00," "01," "10," or "11." When they are set to "00" (i.e., initial state), it means that the card is in normal and usable state. When they are set to "01," it means that the card was trapped and collected because someone attempted to use it in spite of the presence of its lost report. Note that the value "01" is valid only when the Second Fraud Monitoring Mode Flag 511c is "1."

Further, when those flags 511e are set to "10," it indicates that the system trapped and collected the card because someone repeatedly attempted user authentication, exceeding a predetermined retry limit. This value "10" takes effect only when the First Fraud Monitoring Mode Flag 511a is set to "1." Lastly, when the flags are set to "11," it means that the card was safely collected after the submission of its lost report.

The Reward Mode Flag 511f is updated by the ATMs 21, 22, and so on, when they collect such a card that has its Reward Payment Mode Flag 511d set to "1." This flag takes a value of "0" or "1." When it is cleared to "0," it means that no reward has been paid. When it is set to "1," it indicates that the finder received a reward when the system collected the card.

Referring back to FIG. 4, the Fraud Prevention Data 510 includes a parameter named User Authentication Retry Limit 512. Its value is defined when the card is created to provide the maximum limit of retries that the bearer can make in a user authentication process. This parameter is effective only when the User Authentication Retry Mode Flag 511b shown in FIG. 5 is set to "1."

The Amount of Reward 513 is defined when the card is created. It specifies the amount of reward to be paid, regardless of prior submission of a lost report, to a person who found and took the card to a terminal station such as the ATMs 21, 22, and so on. This parameter is valid only when the Reward Payment Mode Flag 511d shown in FIG. 5 is set to "1." The system would withdraw the specified amount of money from a bank account that was opened in the name of the rightful cardholder.

The next section will now provide another embodiment of a portable data storage device, or card, designed for use in the proposed monetary data management system.

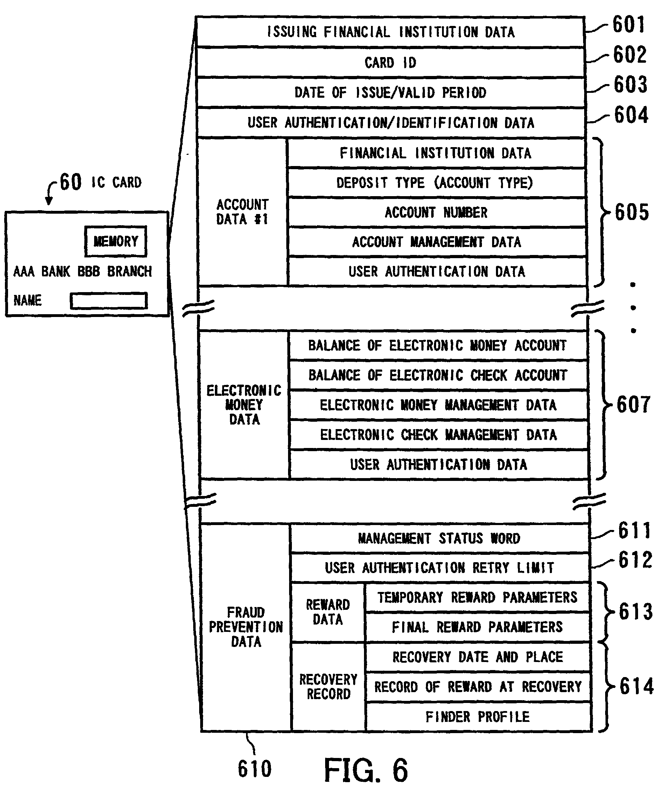

FIG. 6 is a diagram explaining what kind of data is stored in the memory device of an IC card, which is one of the card types that the proposed monetary data management system supports. This illustrated IC card 60 has a memory chip for retaining various information as shown in FIG. 6. Actually, the IC card 60 serves as an electronic wallet device, which supports a two-step rewarding mechanism. Suppose that the IC card 60 was lost and found. Then the owner would pay a reward to the finder in two steps: temporary reward and final reward. The memory chip stores the following parameters:
- Issuing Financial Institution Data 601 which includes the name and code of the country where the IC card 60 was issued, and the code of the issuing financial institution
- Card ID 602 which identifies the IC card 60 itself
- Date of Issue/Valid Period 603
- User Authentication/Identification data 604 which the bearer will be requested to enter when using the IC card 60
- Account Data 605 which describes an account of the cardholder
- Electronic Money Data 607 which describes electronic money contained in the IC card 60
- Fraud Prevention Data 610 which prevents unauthorized use of the IC card 60

The Fraud Prevention Data 610 includes the following parameters:
- Management Status Word 611
- User Authentication Retry Limit 612
- Reward Data 613
- Recovery Record 614

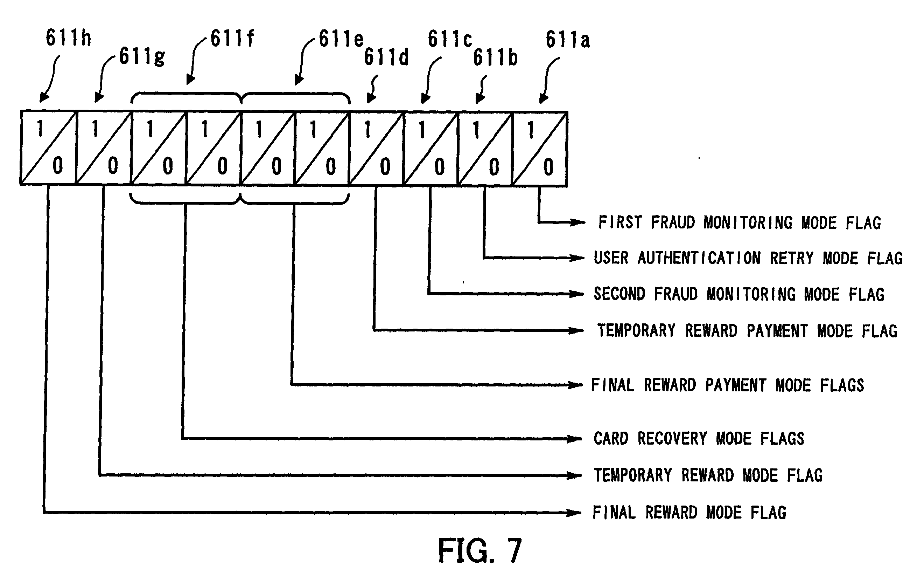

FIG. 7 shows the details of the Management Status Word 611, which is a part of the Fraud Prevention Data 610 shown in FIG. 6. This Management Status Word 611 includes at last the following parameters:
- First Fraud Monitoring Mode Flag 611a
- User Authentication Retry Mode Flag 611b
- Second Fraud Monitoring Mode Flag 611c
- Temporary Reward Payment Mode Flag 611d
- Final Reward Payment Mode Flags 611e
- Card recovery Mode Flags 611f
- Temporary Reward Mode Flag 611g
- Final Reward Mode Flag 611h

The First Fraud Monitoring Mode Flag 611a is the same as what has been explained in FIG. 5 as the First Fraud Monitoring Mode Flag 511a; no explanation will be repeated here.

Also, the User Authentication Retry Mode Flag 611b is the same as what has been explained in FIG. 5 as the User Authentication Retry Mode Flag 511b; no explanation will be repeated here.

Further, the Second Fraud Monitoring Mode Flag 611c is the same as what has been explained in FIG. 5 as the Second Fraud Monitoring Mode Flag 511c; no explanation will be repeated here.

The Temporary Reward Payment Mode Flag 611d is defined when the card is created, which takes a binary value of "0" or "1." When this flag is cleared to "0," it means that the system is programmed not to perform an automatic payment of temporary reward even if someone has delivered the card as a found article. When it is set to "1," the system will automatically give a predetermined amount of temporary reward to a person who found and delivered the card.

The final reward payment mode flags 611e are defined when the card is created, which take a value of "00," "01," "10," or "11." The value "00" means that the system will automatically give a final reward, together with a temporary reward, to a person who found and delivered the card.

The value "01" means that the loser will give a final reward afterward, based on the contact information that the finder left when he/she delivered a lost card.

The value "10" means that the system will automatically provides the finder with both a temporary and final rewards which are, however, the minimum amount within a predetermined range of reward (described later).

The value "11" means that the system will automatically provides the finder with both a temporary and final rewards which are the maximum amount within a predetermined range of reward (described later).

The card recovery mode flags 611f is the same as what has been explained in FIG. 5 as the card recovery mode flags 511e; no explanation will be repeated here.

The Temporary Reward Mode Flag 611g is updated by the ATMs 21, 22, and so on, when they collect such a card whose Temporary Reward Payment Mode Flag 611d is set to "1." The flag 611g takes a value of "0" or "1." The value "1" indicates that the system paid a temporary reward to the finder when the card was returned, whereas the value "0" means that the system has not.

The Final Reward Mode Flag 611h is updated by the ATMs 21, 22, and so on, when they collect such a card whose Final Reward Payment Mode Flags 611e are set to "00," "10," or "11." The flag 611h takes a value of "0" or "1." The value "1" indicates that the system paid a final reward to the finder when the card was returned, whereas the value "0" means that the system has not.

Referring back to FIG. 6, the Fraud Prevention Data 610 includes a parameter named "User Authentication Retry Limit" 612, the value of which is defined when the card is created. This parameter provides the maximum limit of retries that the bearer can make in a user authentication process. It is effective only when the User Authentication Retry Mode Flag 611b shown in FIG. 7 is set to "1."

The Reward Data 613 is also defined when the card is created. Here, the cardholder specifies how much money the system will automatically pay as a temporary reward and a final reward, regardless of prior submission of a lost report, to a person who found and took the card to a terminal station such as the ATMs 21, 22, and so on. Actually, there are two options regarding the setup of this Reward Data 613. The first option is to set the absolute amount of the reward to be paid. The second option is to set the reward on a percentage basis. That is, the reward is specified in terms of what percentage of the current electronic money balance of the card will be paid as a reward. Note that this parameter is valid only when the Temporary Reward Payment Mode Flag 611d shown in FIG. 7 is set to "1." The system would withdraw the specified amount of money from a bank account that was opened in the name of the rightful cardholder.

The Recovery Record 614 is a record about the recovery of the card, which comprises the following fields:
- Recovery Date and Place
- Record of Reward at Recovery
- Finder Profile
More specifically, the Recovery Place field stores the financial institution name, branch office name, terminal ID, and other information, indicating which financial institution accepted the card as a found article. The Record of Reward at Recovery field gives the total amount of money that was paid as the reward when the card was recovered. The Finder Profile field shows the finder's name and contact information.

The next section will explain how the ATMs 21 and so on and the financial institution processor 11 and so on will operate in the card-based monetary data management system of FIGS. 2 and 3.

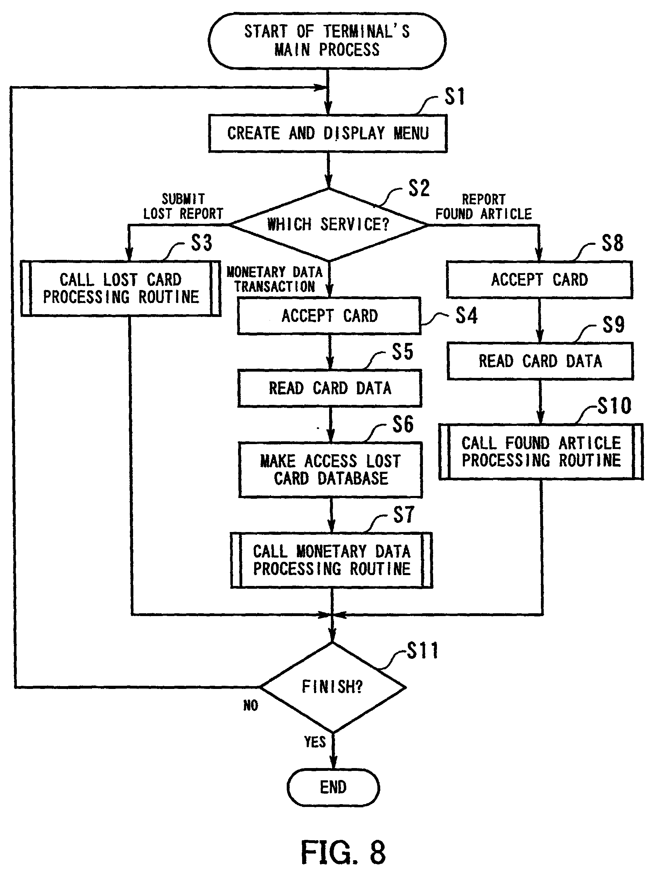

FIG. 8 is a flowchart which shows the main process of an ATM. The following will explain the process in the order of step number.
(S1) The ATM creates and displays a selection menu on a monitor screen to receive a service request from the user.
(S2) The ATM receives a service request from the user. If the submission of a lost report is selected, the process advances to step S3. If the user is requesting monetary data processing, the process advances to step S4. If the user is submitting a found report, the process branches to step S8.
(S3) The ATM calls a lost card processing routine, the specifics of which will be described later.
(S4) The ATM accepts a card.
(S5) The ATM reads data out of the card accepted at step S4.
(S6) The ATM makes access to its lost card database to compare the card data read out at step S5 with a relevant record in the database.
(S7) The ATM calls a monetary data processing routine, the specifics of which will be described later.
(S8) The ATM accepts a card.
(S9) The ATM reads data out of the card accepted at step S7.
(S10) The ATM calls a found article processing routine, the specifics of which will be described later.
(S11) The ATM receives a user input about whether to finish the current session. If the user has no more requests, the process is terminated. If it has to continue, the process returns to step S1.

The next section will describe the lost card processing routine that has appeared at step S3 of FIG. 8.

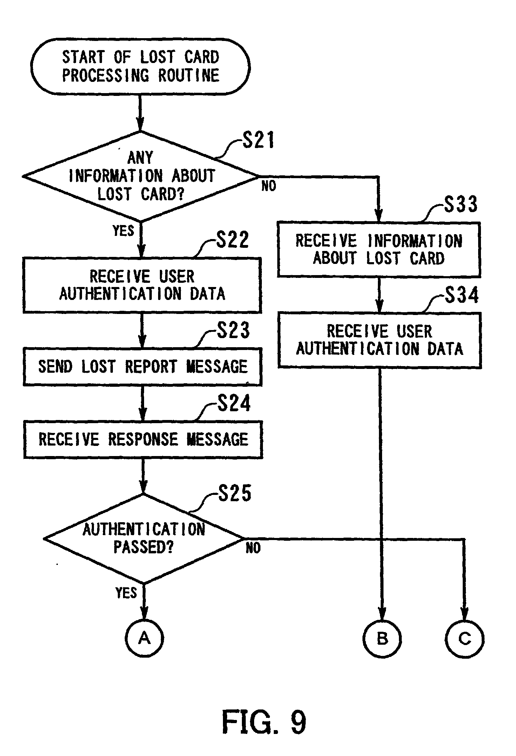

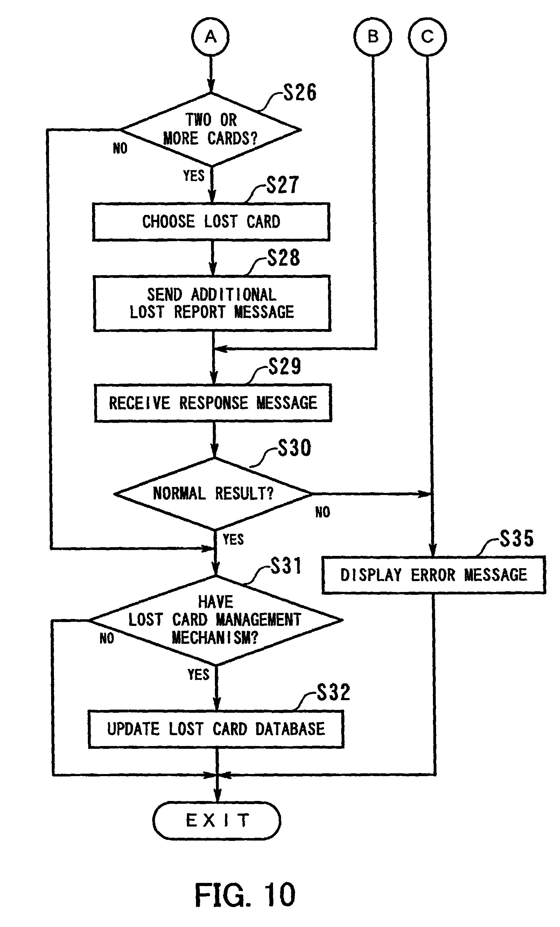

FIGS. 9 and 10 show a flowchart of the lost card processing routine executed at an ATM. The following will explain the process in the order of step number.
(S21) The ATM prompts the user (i.e., loser) to enter the name of the financial institution that issued the missing card. The ATM then asks the loser whether he/she has any specific information about the card (e.g., card ID), and it receives his/her answer. If the loser has some information to enter, the process advances to step S22. If not, the process branches to step S33.
(S22) The ATM receives user authentication data from the loser.
(S23) The ATM sends the lost report message to the financial institution processor, along with the user authentication data provided at step S22.
(S24) The ATM receives a response message from the financial institution processor.
(S25) Based on the response message from the financial institution processor received at step S24, the ATM determines whether the user authentication was successful. If so, the process advances to step S26. If not, the process branches to step S35.
(S26) The ATM asks the loser about the number of cards that he/she owns, and it receive his/her answer. If the claimed number is two or more, the process advances to step S27. If it one, the process skips to step S31.
(S27) Based on the response message received from the financial institution processor at step S24, the ATM displays a list of the cards the loser owns, prompting him/her to indicate which card is missing.
(S28) The ATM transmits to the financial institution processor an additional lost report message about the lost card.
(S29) The ATM receives a response message from the financial institution processor.
(S30) Parsing the response message received from the financial institution processor at step S29, the ATM determines whether the processing has successfully completed. If so, the process advances to step S31. If not, the process branches to step S35.
(S31) The ATM determines whether the ATM itself is equipped with a lost card management mechanism. If it is, the process advances to step S32. If not, the process is terminated.
(S32) The ATM updates the lost card database by activating its own management mechanism. It then exits from the current process.
(S33) The ATM receives information from the loser regarding the lost card.
(S34) The ATM receives user authentication data from the loser. The process now advances to step S29.
(S35) The ATM displays an error message and exits from the current process.

The next section will describe how the financial institution processor acts in concert with ATM in the above lost card processing routine.

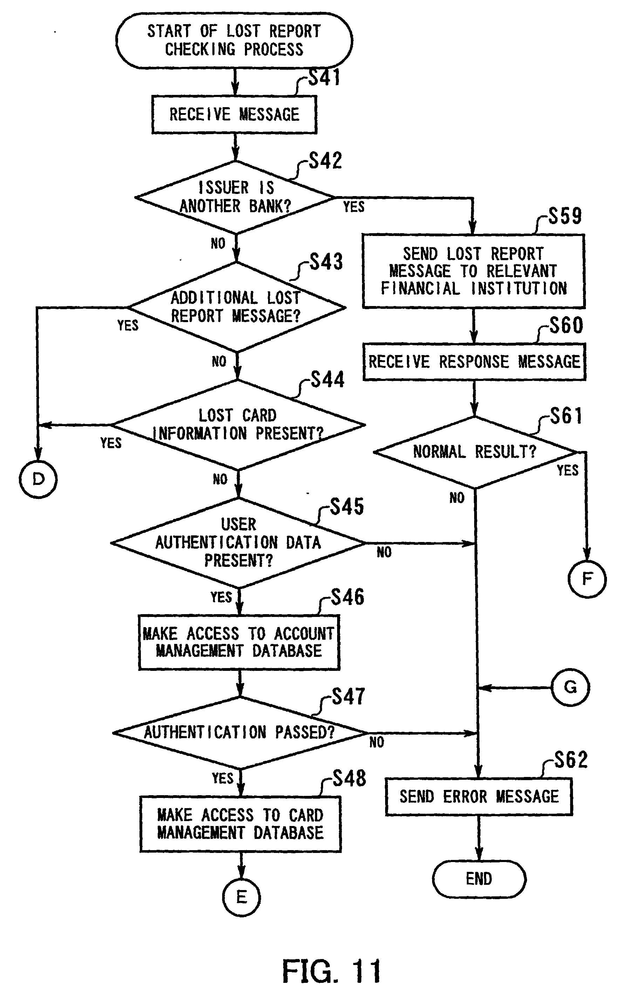

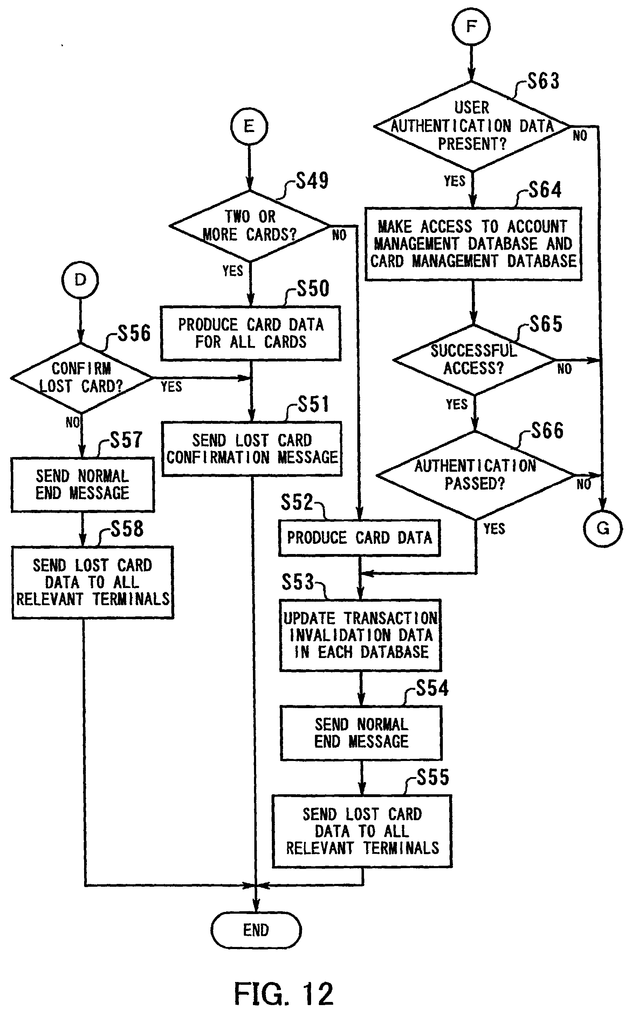

FIGS. 11 and 12 show a flowchart of a process in which the financial institution processor checks a lost report. The following will explain this process in the order of step number.
(S41) The financial institution processor receives a message from the ATM.
(S42) The message received at step S41 includes information about the issuer of the lost card. From this information, the financial institution processor determines whether the is suer is another financial institution. If the issuer is another financial institution, the process advances to step S59. If the issuer is the financial institution that the processor is serving, the process advances to step S43.
(S43) The financial institution processor determines whether the message received at step S41 is an additional lost report message. If so, the process branches to step S56. If not, the process proceeds to step S44.
(S44) The financial institution processor determines whether the loser has entered information about his/her lost card data to an ATM. If there is no such information, the process advances to step S45. If there is, the process branches to step S56.
(S45) The financial institution processor determines whether the message received at step S41 includes user authentication data. If user authentication data is present, the process advances to step S46. If not, the process proceeds to step S62.
(S46) The financial institution processor makes access to the account management database to verify the user authentication data.
(S47) The financial institution processor tests the result of step S46. If the user authentication was successful, the process advances to step S48. If not, the process branches to step S62.
(S48) The financial institution processor makes access to the card management database.
(S49) The financial institution processor determines whether the loser has two or more cards. If so, the process advances to step S50. If the lost card is the only card that he/she owns, the process branches to step S52.
(S50) The financial institution processor produces card data for all cards which the loser claims to own.
(S51) The financial institution processor sends all the card data produced at step S50 to the ATM. It also sends a message to the ATM to request the loser to make sure that the card is what he/she claims to have lost. The financial institution processor exits from the current process to finish the processing about the ATM.
(S52) The financial institution processor produces relevant card data.
(S53) Based on the produced card data, the financial institution processor updates transaction invalidation data in each local database.
(S54) The financial institution processor sends a normal end message to the ATM.
(S55) The financial institution processor exits from the current process, after transmitting the lost card data to all relevant terminals being online or connected via the financial institution network.
(S56) The financial institution processor determines whether the confirmation of the lost card is necessary. If so, the process proceeds to step S51. If not, the process advances to step S57.
(S57) The financial institution processor sends a normal end message to the ATM.
(S58) The financial institution processor exits from the current process, after transmitting the lost card data to all relevant terminals being online or connected via the financial institution network.
(S59) The financial Institution processor sends a lost report message to a relevant financial institution processor over the financial institution network.
(S60) The financial Institution processor receives and parses a response message returned from the remote financial institution processor to which the lost report message was sent at step S59.
(S61) The financial institution processor determines whether the response message parsed at step S60 indicates a normal result. If so, the process branches to step S63. If any error is indicated in the message, the process advances to step S62.
(S62) The financial institution processor exits from the current process about the ATM, after transmitting an error message to it.
(S63) The financial institution processor determines whether the message received at step S41 includes user authentication data. If so, the process advances to step S64. If not, the process proceeds to step S62.
(S64) The financial institution processor attempts access to the account management database and card management database at the remote financial institution processor.
(S65) The financial institution processor determines whether the access attempted at step S60 was successful. If so, the process advances to step S66. If not, the process proceeds to step S62.
(S66) The financial institution processor tests the result of step S65. If the user authentication has successfully finished, the process advances to step S53. If not, the process proceeds to step S62.

The next section will describe the monetary data processing routine that appeared at step S7 of FIG. 8.

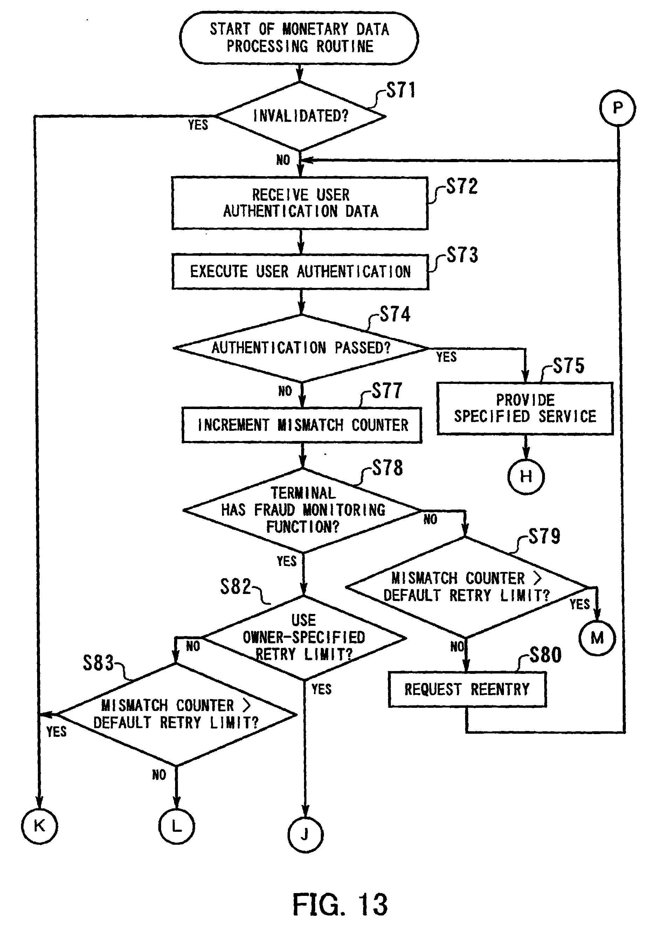

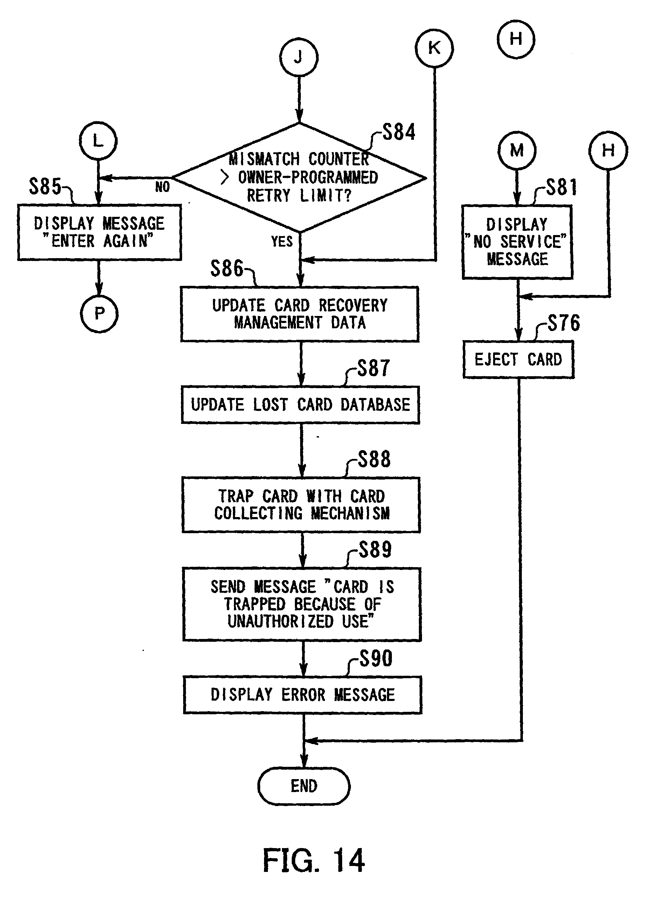

FIGS. 13 and 14 show a flowchart which shows how a financial institution processor executes the monetary data processing routine. The following will explain this process in the order of step number.
(S71) The financial institution processor determines whether the inserted card is invalidated. If so, the process advances to step S86. If it is valid, the process proceeds to step S72.
(S72) The financial institution processor receives the user's authentication data through the ATM.
(S73) The financial institution processor performs a user authentication process.
(S74) The financial institution processor determines whether the user authentication has successfully finished. If so, the process branches to step S75. If the authentication has failed, the process advances to step S77.
(S75) The financial institution processor provides the service specified by the user.
(S76) The ATM ejects the card and exits from the current process.
(S77) The financial institution processor increments its internal mismatch counter by one.
(S78) The financial institution processor determines whether the terminal being used is equipped with a fraud monitoring function. If so, the process advances to step S82. If not, the process proceeds to step S79.
(S79) The financial institution processor determines whether the current value of the mismatch counter is greater than the system's default retry limit. If so, the process branches to step S81. If not, the process advances to step S80.
(S80) The financial institution processor directs the ATM to sends a message to the user, so that he/she will be prompted to enter his/her authentication data again. The process now returns to step S72.
(S81) The financial institution processor sends a message to the ATM, indicating that it is unable to provide the requested service.
(S82) The financial institution processor determines whether the User Authentication Retry Mode requires that the retry limit defined in the card be used. If so, the process advances to step S84. If not, the process proceeds to step S83.
(S83) The financial institution processor determines whether the current value of the mismatch counter is greater than the system's default retry limit. If so, the process branches to step S86. If not, the process advances to step S85.
(S84) The financial institution processor determines whether the current value of the mismatch counter is greater than the retry limit programmed by the rightful owner. If so, the process branches to step S86. If not, the process branches to step S85.
(S85) The financial institution processor directs the ATM to sends a message to the user, so that he/she will be prompted to enter his/her authentication data again. The process now returns to step S72.
(S86) The financial institution processor updates the card recovery management data.
(S87) The financial institution processor updates the lost card database.
(S88) The financial institution processor directs the ATM to trap and collect the inserted card with its card collecting mechanism.
(S89) Through the ATM, the financial institution processor sends a message to the user to indicate that the card has been trapped because of its unauthorized use.
(S90) The financial, institution processor exits from the current process after transmitting an error message to the ATM.

The above section has described the monetary data processing routine at the financial institution processor, which is performed in concert with the ATM. The next section will now explain how the ATM actually collects a card for suspicion of unauthorized use.

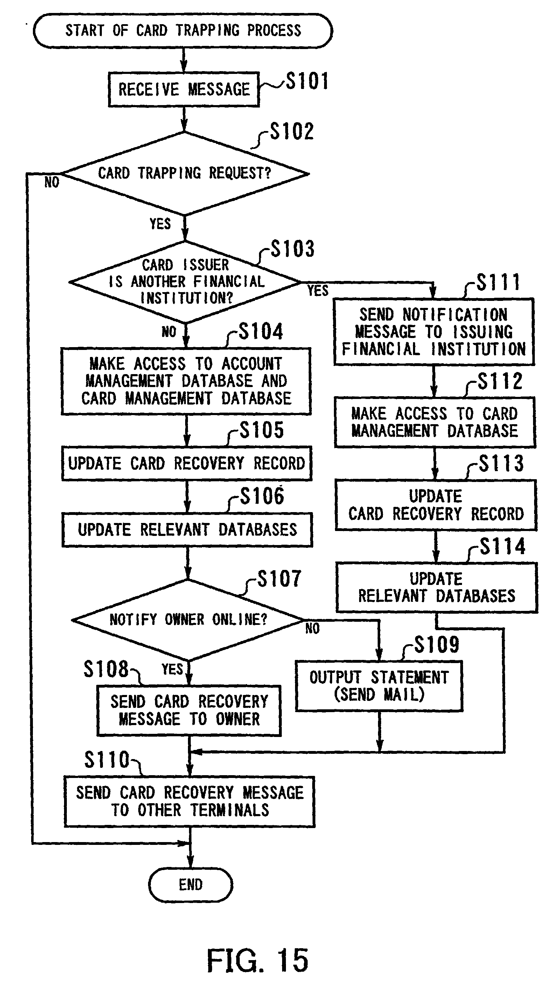

FIG. 15 is a flowchart which shows a card trapping process where the ATM collects a card that someone has attempted to use in an illegal way. The following will explain this process in the order of step number.
(S101) The ATM receives a message sent from the financial institution.
(S102) The ATM determines whether the received message is requesting the ATM to trap the card so as to avoid unauthorized use. If so, the process advances to step S103. If not, this process is terminated.
(S103) The ATM determines whether the card issuer is another financial institution. If so, the process advances to step S111. If the card issuer is the financial, institution that the ATM is serving, the process advances to step S104.
(S104) The ATM makes access to the account management database and card management database.
(S105) The ATM updates the card recovery record.
(S106) The ATM updates relevant databases.
(S107) The ATM determines whether the owner notification mode is set to "online." If so, the process advances to step S108. If not, the process proceeds to step S109.
(S108) The ATM sends a card recovery message to inform the owner of the recovery of his/her card.
(S109) The ATM outputs a statement describing the recovered card.
(S110) The ATM sends a card recovery message to inform all the relevant terminals having a lost card management mechanism that the lost card has been recovered. It then terminates the current process.
(S111) The ATM sends a message to notify the issuing financial institution that it has collected the card to avoid its unauthorized use.
(S112) The ATM makes access to the card management database of the issuing financial institution.
(S113) The ATM updates the card recovery record in the issuing financial institution.
(S114) The ATM updates relevant databases in the issuing financial institution.

The next section will describe the found article processing routine that is called at step S10 of FIG. 8.

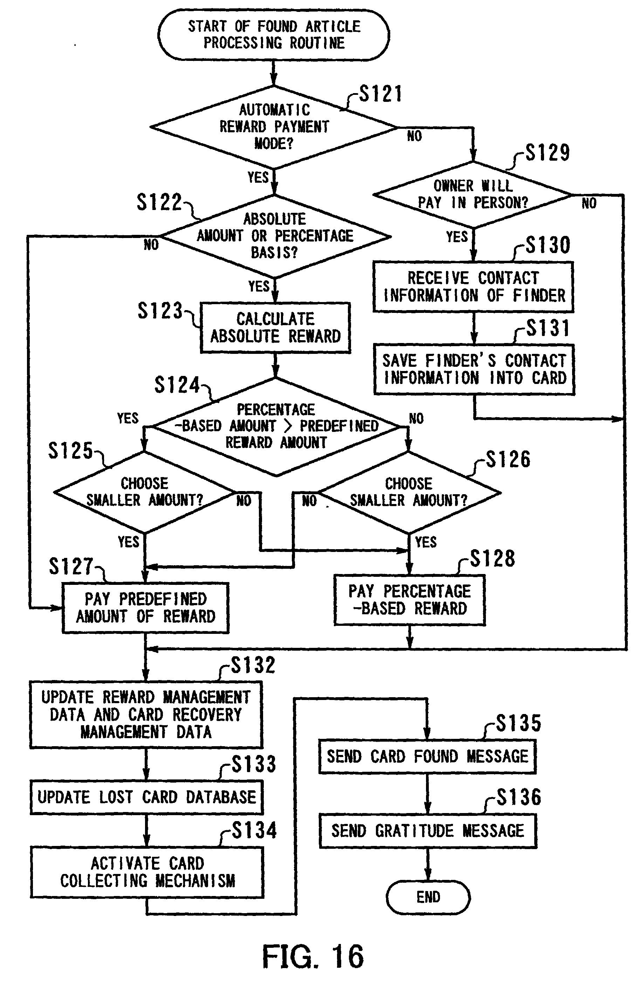

FIG. 16 is a flowchart of the found article processing routine executed at an ATM. The following will explain this process in the order of step number.
(S121) The ATM determines whether the reward payment mode of the found card is set to the automatic payment mode. If so, the process advances to step S122. If not, the process proceeds to step S129.
(S122) The ATM determines whether the found card is configured to give a reward on either of an "absolute amount" basis and "percentage" basis. If the reward is to be paid either on an absolute amount basis or on a percentage basis, the process advances to step S123. If the reward is to be determined with any other method, the process advances to step S127.
(S123) The ATM calculates the reward to be paid by using a percentage that is previously recorded as a parameter in the found card.
(S124) The ATM determines whether the amount calculated at step S123 on a percentage basis is greater than the reward amount predefined In the card. If so, the process advances to step S125. If not, the process proceeds to step S126.
(S125) The ATM determines whether the found card is configured to let the system choose a smaller amount when paying a reward. If so, the process advances to step S127. If not, the process proceeds to step S128.
(S126) The ATM determines whether the found card is configured to let the system choose a smaller amount when paying a reward. If so, the process advances to step S128. If not, the process proceeds to step S127.
(S127) The ATM pays the predefined amount of reward to the finder.
(S128) The ATM pays the percentage-based reward to the finder.
(S129) The ATM determines whether the reward payment mode of the found card is set to such that the cardholder will pay in person. If so, the process advances to step S130. If not, the process proceeds to step S132.
(S130) The ATM accepts data from the finder which describes his/her contact information.
(S131) The ATM saves the finder's contact information into the found card.
(S132) The ATM updates the reward management data and card recovery management data.
(S133) The ATM updates its lost card database.
(S134) The ATM activates its card collecting mechanism to take in the found card.
(S135) The ATM sends to the financial institution processor a message reporting that the lost card has been found and delivered to the ATM.
(S136) The ATM displays a message expressing the cardholder's gratitude to the finder, and then it terminates the current process.

The above section has described how the ATM collects a found card. In connection with this, the next section will explain how the financial institution processor makes a check on a message about the found article.

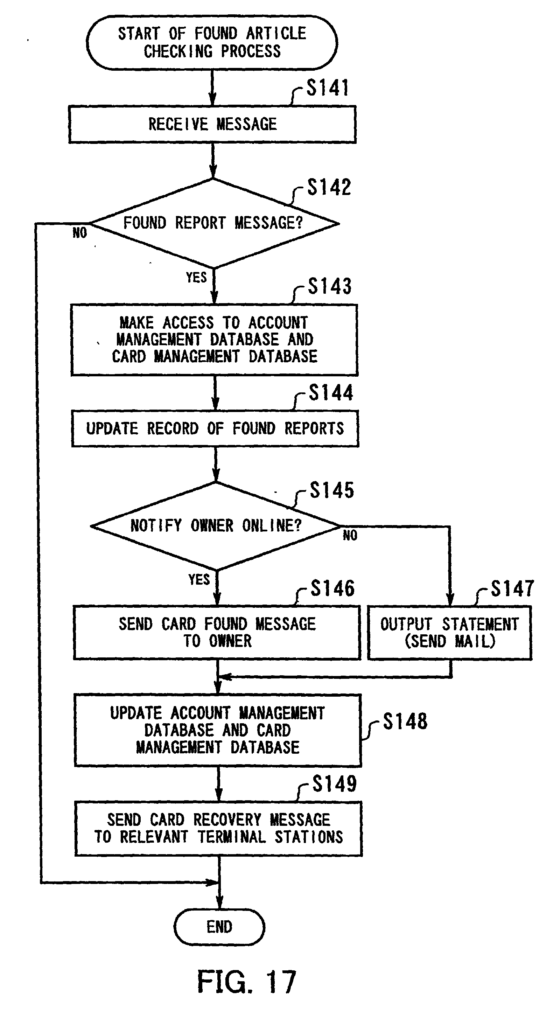

FIG. 17 is a flowchart of a found article checking process executed by the financial institution processor. The following will explain this process in the order of step number.
(S141) The financial institution processor receives a message from an ATM.
(S142) The financial institution processor determines whether the message received at step S141 is a report of a found article. If it is a found report message, the process advances to step S143. If not, the process is terminate.
(S143) The financial institution processor makes access to its account management database and card management database.
(S144) The financial institution processor updates the record of found reports.
(S145) The financial institution processor determines whether the found card is configured in such a way that the cardholder will be notified online. If so, the process advances to step S146. If not, the process proceeds to step S147.
(S146) The financial institution processor sends a message to inform the cardholder that his/her lost card has been found and delivered.
(S147) The financial institution processor outputs a statement describing the found article.
(S148) The financial institution processor renews the account management database and the card management database.
(S149) The financial institution processor sends a recovery completion message to all relevant terminal stations which are linked thereto and have a lost card recovery mechanism. This message informs them of the recovery of the missing card.

While the embodiments have been explained with the assumption that the financial institution processors, ATMS, and terminal stations are dedicated devices for their respective purposes, it is also possible to implement them as computer systems employing the programs according to the present invention.

As seen from the above explanation, the proposed monetary data management system enables people to submit a lost report at the nearest terminal station when they lost their cards. Also, people can return a card to its owner when they find it, through the nearest terminal station, without the need for visiting a lost and found counter of the issuing financial institution of the card. This feature increases the likelihood of recovery of lost cards.

Also, as seen from the above explanation, the proposed monetary data management system protects a lost card from being used by an unauthorized person, because every terminal station has a database of lost cards to detect and capture any lost card. The proposed system, on the other hand, allows the owner to configure his/her card to give a reward to the finder when the card is lost and then found by him/her. This mechanism increases the possibility of recovery of lost cards, besides preventing their unauthorized use.

Further, as seen from the above explanation, the present invention provides a portable data storage device (i.e., card) which stores reward data and other information, together with the owner's authentication data. This configuration contributes to an increased possibility that the card will be returned to its rightful owner, when it is lost.

Further, as seen from the above explanation, the present invention provides a terminal management unit which authenticates the user when performing a transaction and verifies lost and found reports in concert with other terminal management units and computers. This mechanism contributes to an increased likelihood that the lost cards will be recovered, besides preventing their unauthorized use.

Further, as seen from the above explanation, the present invention provides a terminal station which authenticates the user when performing a transaction and verifies lost and found reports in concert with a terminal management unit and other equipment. This mechanism contributes to an increased likelihood that the lost cards will be recovered, besides preventing their unauthorized use.

Further, as seen from the above explanation, the present invention provides a storage medium containing a monetary data management program which causes a computer to function as such a system that allows a customer to submit a lost report when his/her card is lost, or a found report when he/she found a lost card, without visiting a lost and found counter of a relevant financial institution. This mechanism contributes to an increased likelihood that the lost cards will be recovered.

Further, the present invention provides a storage medium containing a monetary data management program which causes a computer to function in such a way that a lost card will be protected from being used by an unauthorized person, because every terminal station has a database of lost cards to detect and capture any lost card. The system also allows the owner to configure his/her card to give a reward to the finder when the card is lost and then found by him/her. This mechanism increases the possibility of recovery of lost cards, besides preventing their unauthorized use.

As described above, the proposed monetary data management system is configured to collect a portable data storage device (card) when it is accepted as a found article. The finder can deliver the card at his/her convenience, without the need for visiting a lost and found desk during business hours. This mechanism increases the possibility that the lost cards will be recovered.

Further, the proposed monetary data management system is configured to accept and store lost reports of portable data storage devices (cards), compare user authentication data with the stored reports at each card transaction, and thereby prevent the use of such cards that are relevant to the lost reports. This mechanism protects the cards from unauthorized use, besides increasing the possibility of recovery of lost cards.

Further, the proposed portable data storage device (card) is configure to store reward data specifying how to pay a reward to a finder who found and delivered the portable data storage device. This feature contributes to an increased possibility of lost card recovery.

Further, the proposed terminal station coupled to a terminal management unit is configured to produce and send found article information to the terminal management unit when a portable data storage device (card) is delivered as a found article. This information contains user authentication data extracted from the portable data storage device. After sending that, the terminal station collects and keeps the delivered portable data storage device. This feature contributes an increased possibility of lost card recovery.

Further, the proposed terminal station coupled to a terminal management unit is configured to accept lost reports concerning portable data storage devices (cards), send them to the terminal management unit, receives the reports redistributed from the terminal management unit, and keeps them locally. When a customer attempts to use a card, his/her authentication data is compared with the stored lost reports, and if there is a match, the terminal station disable access to the monetary data. This mechanism protects lost cards from unauthorized use, besides increasing the likelihood of their recovery.

Further, the proposed terminal management unit is configured to keep found article information sent from a terminal station which describes a specific portable data storage device (card) that was found by someone. The finder can thus take the found card to a terminal station at any time as long as it is operating. This mechanism increases the possibility that the lost cards will be recovered.

Further, the proposed terminal management unit is configured to distribute lost reports so that all terminal stations will share them. This arrangement contributes to an increased likelihood of recovery of lost cards, besides preventing their unauthorized use.

Further, the proposed monetary data management program stored in a storage medium is designed to cause a computer to collect a portable data storage device (card) when it is brought in as a found article. The finder can deliver the card at his/her convenience, without the need for visiting a lost and found desk during business hours. This mechanism increases the possibility that the lost cards will be recovered.

Further, the proposed monetary data management program stored in a storage medium is designed to cause a computer to accept lost reports concerning portable data storage devices (cards), keep them locally, and compare a customer's authentication data with the stored lost reports when he/she attempts to use a card. If there is a match, it disables access to the monetary data. This mechanism increases the possibility of recovery of lost cards, besides protecting them from unauthorized use.

## Claims

1. A monetary data management system which manages monetary data by using a portable data storage device containing user authentication data, comprising:
user authentication means for interfacing with the portable data storage device, and determining whether the bearer of the portable data storage device is an authorized owner thereof;
monetary data handling permission means for granting the bearer a permission to handle the monetary data, when the user authentication means has successfully verified the bearer as the authorized owner of the portable data storage device; and
found article keeping means for collecting and keeping the portable data storage device when the portable data storage device is delivered as a found article.

2. The monetary data management system according to claim 1, wherein the portable data storage device is one of a financial institution card, a credit card, an electronic money card, and an electronic wallet device containing monetary data.

3. The monetary data management system according to claim 1, further comprising recovery notification means for notifying the authorized owner that the portable data storage device has been found, based on the user authentication data contained in the portable data storage device, when the portable data storage device is delivered as a found article.

4. The monetary data management system according to claim 1, further comprising reward data storage means for storing reward data in the portable data storage device to specify how to pay a reward to a finder who found and delivered the portable data storage device.

5. The monetary data management system according to claim 4, further comprising reward payment means for paying a reward, based on the reward data, when the portable data storage device is delivered as a found article.

6. The monetary data management system according to claim 4, further comprising:
contact information receiving means for receiving and storing contact information of the finder, when the system is unable to immediately pay a reward to the finder although the portable data storage device has been delivered as a found article; and
contact information notification means for notifying the authorized owner of the contact information.

7. A monetary data management system which manages monetary data by using a portable data storage device containing user authentication data, comprising:
lost report reception means for receiving and maintaining a lost report;
user authentication means for interfacing with the portable data storage device, comparing the user authentication data in the portable data storage device with that in the lost report, and determining whether the bearer of the portable data storage device is an authorized owner thereof; and
monetary data handling permission means for preventing the bearer from manipulating the monetary data with the portable data storage device when the user authentication data in the portable data storage device agrees with that in the lost report, and granting the bearer a permission to handle the monetary data when the bearer has successfully been verified as the authorized owner of the portable data storage device.

8. The monetary data management system according to claim 7, further comprising lost article keeping means for collecting and keeping the portable data storage device as a lost and found article, when the user authentication data in the portable data storage device agrees with that in the lost report.

9. A portable data storage device which contains user authentication data to permit a bearer to handle monetary data, comprising means for storing reward data which is used in giving a reward to a person who has delivered the portable data storage device as a found article.

10. The portable data storage device according to claim 9, wherein the portable data storage device is one of a financial institution card, a credit card, an electronic money card, and an electronic wallet device containing monetary data.

11. A terminal station coupled to a terminal management unit, which handles monetary data through a portable data storage device containing user authentication data, comprising:
user authentication means for interfacing with the portable data storage device, and determining whether a bearer of the portable data storage device is an authorized owner thereof;
monetary data handling permission means for granting the bearer a permission to handle the monetary data, when the user authentication means has successfully verified the bearer as the authorized owner of the portable data storage device;
found article information sending means for producing and sending found article information to the terminal management unit when the portable data storage device is delivered as a found article, the found article information including the user authentication data extracted from the portable data storage device; and
found article keeping means for collecting and keeping the portable data storage device when the portable data storage device is delivered as a found article.

12. The terminal station according to claim 11, wherein the portable data storage device is one of a financial institution card, a credit card, an electronic money card, and an electronic wallet device containing monetary data.

13. The terminal station according to claim 11, further comprising reward data storage means for storing reward data in the portable data storage device to specify how to pay a reward to a finder who found and delivered the portable data storage device.

14. The terminal station according to claim 13, further comprising reward payment means for paying a reward, based on the reward data, when the portable data storage device is delivered as a found article.

15. The terminal station according to claim 14, wherein said reward payment means pays the reward according to a reception method specified by the finder, and if necessary, requests the terminal management unit to update the monetary data stored therein.

16. The terminal station according to claim 13, further comprising contact information notification means for receiving and storing contact information of the finder, when the system is unable to immediately pay the reward to the finder although the portable data storage device has been delivered as a found article, and notifying the terminal management unit of the received contact information.

17. A terminal station coupled to a terminal management unit, which handles monetary data through a portable data storage device containing user authentication data, comprising:
lost report sending means for accepting a lost report stating that the portable data storage device is lost, and sends the received lost report to the terminal management unit;
distribution data reception means for receiving and storing the lost report redistributed from the terminal management unit;
user authentication means for interfacing with the portable data storage device, comparing the user authentication data in the portable data storage device with that in the lost report, and determining whether a bearer of the portable data storage device is an authorized owner thereof; and
monetary data handling permission means for preventing the bearer from manipulating the monetary data with the portable data storage device, when the user authentication data in the portable data storage device agrees with that in the lost report, and for granting the bearer a permission to handle the monetary data, when the bearer has successfully been verified as the authorized owner of the portable data storage device.

18. The terminal station according to claim 17, further comprising:
lost article keeping means for collecting and keeping the portable data storage device as a lost and found article when the user authentication data in the portable data storage device agrees with that in the lost report; and
recovery notification means for sending a recovery notification to the terminal management unit to indicate recovery of the portable data storage device, when said lost article keeping means has collect the portable data storage device as a lost and found article.

19. A terminal management unit which manages a terminal station coupled thereto by using a portable data storage device containing user authentication data to permit a bearer thereof to handle monetary data, comprising found article information storage means for receiving and storing found article information sent from the terminal station, the found article information including the user authentication data extracted from the portable data storage device.

20. The terminal management unit according to claim 19, further comprising reward data storing means for causing the portable data storage device to store reward data therein which specifies how to pay a reward to a finder who found and delivered the portable data storage device.

21. The terminal management unit according to claim 19, further comprising monetary data management means for managing the monetary data, and updating the monetary data upon request from the terminal station.

22. The terminal management unit according to claim 19, further comprising:
contact information receiving means for receiving and storing contact information of the finder supplied from the terminal station; and
contact information notification means for notifying the authorized owner of the contact information.

23. A terminal management unit which manages terminal stations linked therewith by using a portable data storage device containing user authentication data to permit a bearer thereof to handle monetary data, comprising:
lost report storage means for receiving a lost report concerning the portable data storage device from one of the terminal stations, and storing the received lost report; and
lost report distributing means for distributing the lost report to all the terminal stations linked therewith.

24. The terminal management unit according to claim 23, further comprising:
recovery notification storage means for receiving and storing a recovery notification sent from one of the terminal station; and
recovery notification distribution means for distributing the recovery notification to all the terminal stations linked therewith.

25. A computer-readable medium storing a monetary data management program which manages monetary data by using a portable data storage device containing user authentication data to permit a bearer thereof to handle the monetary data, the program causing a computer to function as:
user authentication means for interfacing with the portable data storage device, and determining whether the bearer is an authorized owner thereof;
monetary data handling permission means for granting the bearer a permission to handle the monetary data, when the user authentication means has successfully verified the bearer as the authorized owner of the portable data storage device; and
found article keeping means for collecting and keeping the portable data storage device when the portable data storage device is delivered as a found article.

26. The computer-readable medium storing the monetary data management program according to claim 25, wherein the portable data storage device is one of a financial institution card, a credit card, an electronic money card, and an electronic wallet device containing monetary data.

27. The computer-readable medium storing the monetary data management program according to claim 24, wherein the program further causes the computer to function as recovery notification means for notifying the authorized owner that the portable data storage device has been found, based on the user authentication data contained in the portable data storage device, when the portable data storage device is delivered as a found article.

28. The computer-readable medium storing the monetary data management program according to claim 24, wherein the program further causes the computer to function as reward data storing means for causing the portable data storage device to store reward data therein which specifies how to pay a reward to a finder who found and delivered the portable data storage device.

29. The monetary data management system according to claim 27, which causes the computer to function as reward payment means for paying a reward, based on the reward data, when the portable data storage device is delivered as a found article.

30. The computer-readable medium storing the monetary data management program according to claim 27, wherein the program further causes the computer to function as:
contact information receiving means for receiving and storing contact information of the finder, when the system is unable to immediately pay a reward to the finder although the portable data storage device has been delivered as a found article; and
contact information notification means for notifying the authorized owner of the contact information.

31. A computer-readable medium storing a monetary data management program which manages monetary data by using a portable data storage device containing user authentication data, the program causing a computer to function as:
lost report reception means for receiving and maintaining a lost report;
user authentication means for interfacing with the portable data storage device, comparing the user authentication data in the portable data storage device with that in the lost report, and determining whether a bearer of the portable data storage device is an authorized owner thereof; and
monetary data handling permission means for preventing the bearer from manipulating the monetary data with the portable data storage device, when the user authentication data in the portable data storage device agrees with that in the lost report, and for granting the bearer a permission to handle the monetary data, when the bearer has successfully been verified as the authorized owner of the portable data storage device.

32. The computer-readable medium storing the monetary data management program according to claim 31, wherein the program further causes the computer to function as lost article keeping means for collecting and keeping the portable data storage device as a lost and found article, when the user authentication data in the portable data storage device agrees with that in the lost report.
